# NEW EUROPEAN PATENT SPECIFICATION

(11) **EP 3 107 485 B2**
(45) Date of publication and mention of the opposition decision: **24.01.2024**
(45) Mention of the grant of the patent: 16.12.2020
(21) Application number: 15708340.3
(22) Date of filing: 19.02.2015
(51) Int. Cl.: A61C 17/22

(54) **ORAL CARE SYSTEM**
MUNDPFLEGESYSTEM
SYSTÈME DE SOINS BUCCO-DENTAIRES

(30) Priority: 20.02.2014 US 201461942212 P
(43) Date of publication of application: 28.12.2016
(73) Proprietor: Braun GmbH, 61476 Kronberg (DE)
(72) Inventor: VETTER, Ingo, 61476 Kronberg (DE); SCHIEBAHN, Matthias, 61476 Kronberg (DE); BRZEZINSKI, Eddie, 61476 Kronberg (DE); KOENIG, Felix, 61476 Kronberg (DE)
(74) Representative: P&G Patent Germany
(86) International application number: PCT/IB2015/051267
(87) International publication number: WO 2015/125100

(56) References cited:
- WO-A1-2014/016718
- US-A1- 2011 314 677
- US-A1- 2012 151 697
- US-A1- 2013 091 642
- US-A1- 2013 125 326

## Description

### FIELD OF THE INVENTION

The present disclosure relates to an oral care system. More particularly, the present disclosure relates to techniques, methods, systems and mechanisms for performing wireless communication between an electric toothbrush and a mobile computing device.

### BACKGROUND OF THE INVENTION

Consumers use numerous personal care products in their bathrooms, where space can be very limited. There is a desire to provide products and methods for delivering useful personal care (or other) information to consumers before, during, or after use of one or more personal care products. As is now known in the computing and mobile handset and smart phone industries, a new computing paradigm is emerging and is being driven by the proliferation of software applications now commonly known as apps for handheld or mobile devices. This proliferation is directly tied to consumer adoption of smart phones and tablets. Companies are now creating their own unique apps that relate to and in some cases interact with products and/or services offered by the company, including personal care products. Even when free, it is often difficult to achieve a high penetration rate and consumer adoption rate. As such, there remains a need for an app that works with an electric toothbrush that can provide consumers with increased flexibility, improved interoperability and improved user experience prior to the start of brushing.

Document WO 2014/016718 A1 describes a tooth cleaning device that comprises a communication element for supporting a bi-directional short range communication with a wireless range of no more than 50 cm. A communication controller comprises a connection controller which automatically establishes a short range communication link with an external communication entity in response to a detection of the external communication entity being within range of the communication element. A data communication controller communicates data to the external communication entity over the short range communication link where the data includes usage data for the tooth cleaning device.

Document US 2013/0125326 A1 describes a personal hygiene device that includes a toothbrush; and a display for displaying interactive representations, which are controllable from the display by means of a control device. Removal of the device from a charging station is detected by detecting a decrease of current in the charging coil. Wireless protocol transmission to a display is started up.

### SUMMARY OF THE INVENTION

The invention is an oral care system in accordance with claim 1.

These and other features, aspects and advantages of specific embodiments will become evident to those skilled in the art from a reading of the present disclosure.

### BRIEF DESCRIPTION OF THE DRAWINGS

While the specification concludes with claims which particularly point out and distinctly claim the present invention, it is believed that the present invention will be better understood from the following description of preferred embodiments, taken in conjunction with the accompanying drawings, in which like reference numerals identify identical elements and wherein:
FIG. 1 is an illustration of an oral care system according to one or more embodiments illustrated and described herein;
FIG. 3 depicts an interface on a mobile computing device for accessing a computer application according to one or more embodiments illustrated and described herein;
FIG. 4 depicts an example user interface that is displayed by a mobile computing device upon making a wireless connection according to one or more embodiments illustrated and described herein; and
FIG. 5 is a flow chart indicating an example embodiment of operating an oral care system according to one or more embodiments illustrated and described herein.

### DETAILED DESCRIPTION OF THE INVENTION

The following text sets forth a broad description of numerous different embodiments of the present disclosure. The description is to be construed as exemplary only and does not describe every possible embodiment since describing every possible embodiment would be impractical, if not impossible.

According to the present disclosure, one example of an oral care system includes an electric toothbrush and a mobile computing device. Although the embodiments described herein in detail are directed toward a toothbrush, the disclosure is applicable to any personal hygiene device, such as for example an oral irrigator, a flossing device, an electric shaver, an electric epilator, a skin treatment device, etc or any other personal hygiene device. In addition, toothbrushes that have manually operated heads, but include electronics, are included in the term "electric" toothbrush, such as for example, a manual toothbrush with electronics embedded in the handle. Moreover, the term toothbrush includes handles (motorized handles if the toothbrush has an motorized head) having other oral care implements attached thereto, such as tongue cleaners, floss attachments, gum massagers, polishing elements, etc. Therefore use of the term toothbrush includes a toothbrush handle having an attachment that may not be a "brush."

In one embodiment, wireless communication between the toothbrush and the mobile computing device may be established through Bluetooth or Bluetooth LE. Bluetooth LE is intended to provide considerably reduced power consumption and cost while maintaining a similar communication range. A device that can implement both is known as Bluetooth 4.0 dual-mode devices. Bluetooth technology is fundamentally aimed at performing communication over a short distance, for example, within 10 m. This range can be increased to 100 m (for Bluetooth) and 50 m (for Bluetooth LE) according to the applied output power. According to the Bluetooth standard, data transmission using Bluetooth has a maximum rate of 64 Kbps in the case of synchronous (voice) channel transmission and a maximum rate of 723.2 Kbps in the case of asynchronous (data) channel transmission. Further, because Bluetooth technology uses frequency-hopping spread spectrum technology, security is improved in comparison with other existing wireless communication protocols. Moreover, since Bluetooth technology can transmit voices as well as character data using Continuous Variable Slope Delta (CVSD) modulation, voice coding is improved.

The specifications of Bluetooth provide for the possibility of remotely controlling a remote device over a bidirectional wireless connection. In practice, the remote device is usually a mobile telephone or a computer peripheral, however the Bluetooth specifications are not limited to appliances of that type and they include in particular profiles that are compatible with transmitting high-quality coded multichannel audio streams (advanced audio distribution profile (A2DP)), and also profiles that provide interoperability of Bluetooth appliances with audio and video control functions (audio video remote control profile (AVRCP)).

Bluetooth technology is particularly advantageous given its universal and evolving nature, the existence of numerous functions, and also of numerous components specially designed for implementing it, which components are also inexpensive. For example, mobile computing devices having any one of the following operating systems support Bluetooth LE, iOS, Android, Windows Phone and BlackBerry, OS X and Windows 8.

Nevertheless, this choice of technology is not limiting in anyway, and the wireless connection may be implemented by means of other wireless transmission techniques, providing such techniques present a data rate that is sufficient to enable a continuous data stream to be transmitted (e.g. high-quality digital audio or video signals): this applies for example to the so-called "WiFi" IEEE 802.11 standard (ISO/IEC 8802-11).

As used herein, the term "memory" refers to a volatile or non-volatile storage media, such as ROM, SRAM, DRAM, and/or other types of RAM, flash memory, secure digital (SD) memory, registers, compact discs (CD), digital versatile discs (DVD), and/or other types of non-transitory computer-readable mediums. As is well known in the art, memory may include a plurality of distributed memory coupled via electrical circuitry. These non-transitory computer-readable mediums may reside within the mobile computing device and/or external to the mobile computing device. Additionally, the memory component may be configured to store operating logic and a computer application.

As used herein, the term "mobile computing device" may include a mobile telephone, personal digital assistant, laptop computer, tablet, a game console (for example, NINTENDO DS, NINTENDO 3DS or SONY PSP), smart phone (for example, iPhone^{®} or Android phone), netbooks, GPS devices, e-readers, iPads^{®} and/or other mobile device that can be connected to the Internet or one or more computer networks. A mobile computing device may have a memory that stores a computer application. A mobile computing device may also be realized by a proprietary device.

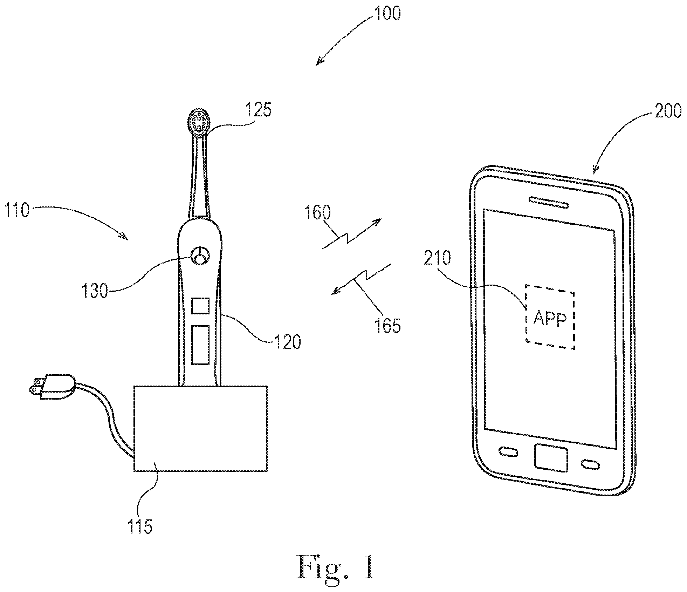

Referring now to FIG. 1, an oral care system 100 is shown including a rechargeable electric toothbrush 110 and a mobile computing device 200 in accordance with one embodiment of the present disclosure. In one embodiment, the electric toothbrush 110 includes a charging base 115, a motorized handle 120, and a head 125. In one embodiment, the toothbrush 110 is arranged to be positioned in the charging base 115 which can transfer power to the toothbrush 110 in order to charge a battery of the toothbrush 110. In one embodiment, toothbrush 110 may also include a user interface, for example a button 130, that can be activated by a user. Toothbrush 110 may also include wireless communications capabilities to communicate with mobile computing device 200 via wireless data signals 160, 165. Wireless communication 160 and 165 between the toothbrush 110 and the mobile computing device 200 is a bidirectional communication allowing data to be communicated both to and from the toothbrush 110, for example through Bluetooth, WiFi, WLAN, LAN, cellular, or any type of radio communication.

In one embodiment, a Bluetooth module (not shown) in the toothbrush 110 performs Bluetooth communication with a Bluetooth module (not shown) of the mobile computing device 200 according to Bluetooth protocol. However, before toothbrush 110 and mobile computing device 200 are able to communicate with each other through Bluetooth, the toothbrush 110 and the mobile computing device 200 must go through an initial, one-time pairing procedure using Bluetooth LE "pairing procedure" that allows one device to associate itself with another. According to the present disclosure, the traditional Bluetooth pairing process where you need to enter a PIN code is not used. Bluetooth LE provides the possibility to exchange data without entering a PIN code. In order to "pair" the toothbrush 110 and the mobile computing device 200 according to the present disclosure, the user must first switch on toothbrush 110 and the application located on the mobile computing device 210 waits for the toothbrush 110 to save the UUID (Unique ID) of the toothbrush in order to recognize the toothbrush automatically during subsequent uses.

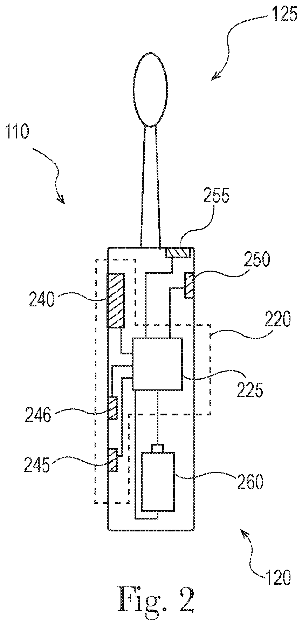

As seen in FIG. 2 , the toothbrush 110 may also include an electronic circuit 220 that may comprise a microcontroller (not shown), at least one electric load 240, at least a first sensor 250 for providing a first signal indicating a relevant change of a first external condition and an energy source 260. In one embodiment, the first sensor 250 may provide the first signal, when a respective sensor value crosses a predetermined threshold value, thus indicating the relevant change. The sensor is a capacitance sensor. In some embodiments, the electric toothbrush 110 may include at least a second sensor for monitoring a second external condition and for providing a second signal in case the second signal has changed in a relevant manner. The second sensor is in particular different to the first sensor so that it is sensitive to a relevant change of a different external condition. The first sensor 250 is a capacitive sensor, the first sensor 250 is sensitive to changes in its environment, and for example, may detect the presence of the hand of a user in its close proximity.

Still referring to FIG. 2, the electronic circuit 220 may include a microcontroller and a control circuit 225 for controlling, for example, a display or light emitting elements or an audio unit for reproduction of audible signals. In some embodiments, the electronic circuit 220 includes at least two electric loads 240, 245 (for example, at least one light emitting element 245 and a display 240) or even more electric loads 240, 245, 246 (including a further light emission element 246). In some embodiments, the electric load 240 may be one from the group consisting of light emitting elements, information displaying elements, and audio and/or video signal reproducing elements (for example a loudspeaker). In one example, the handle 120 of the electric toothbrush 115 may include the word "Bluetooth" with light emitting elements above and below the text. In embodiments with two or more electric loads, each of the electric loads may be one from the group previously listed.

In another embodiment, the electric toothbrush 110 may include at least a second sensor 255 for providing a second signal indicating a relevant change of a second external condition different to the first external condition. The relevant change may again be determined by a sensor value crossing a predetermined threshold value. The electronic circuit 220 may be coupled to the energy source 260 and to the first sensor 250 (and in some embodiments, to a second sensor 255).

FIG. 1 further depicts mobile computing device 200 including an application program ("app") 210, for example an oral care or ORAL B app, for causing the mobile computing device to display information derived from the data signals 160, 165 and related to the toothbrush. In another embodiment, the application program 210 may also display information not related to electric toothbrush 110 or oral care in general, but that a user finds interesting, for example, news, weather or sports information. Each operating system associated with mobile computing devices typically has its own "app" distribution system, often referred to as an "App Store". APPLE sells and distributes apps through its iTunes^{®} online distribution platform. ANDROID based devices use the 'Play Store" to distribute apps. In addition, there are many web sites that provide the ability to download associated apps, either through direct download or a link to an associated distribution system.

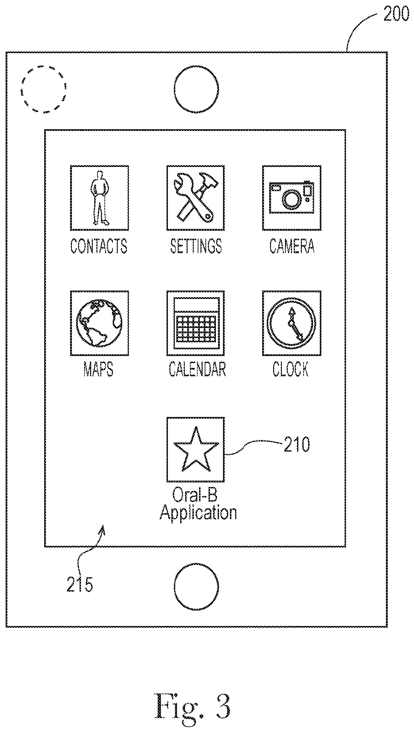

FIG. 3 depicts an interface for accessing the ORAL B application 210. As illustrated, the mobile computing device 200 is configured to provide an interface (for example, via the operating system). The interface may be configured to provide the user with access to one or more computer applications 215 that are stored on the mobile computing device 200. As illustrated, the mobile computing device 200 may include and provide options to access a contacts application, a settings application, a camera application, a maps application, a calendar application, a clock application and an oral care application. As illustrated, the oral care application 210 may be accessed by selection of the ORAL B application option.

In one embodiment, the electric toothbrush 110 is positioned in or on charging base 115 waiting for a relevant change of an external condition. At this time, the toothbrush is in a "sleep mode." A sleep mode is a mode of the electric toothbrush 110 in which it at least consumes in average less energy from an energy source than in any other mode, in particular the toothbrush 110 may not consume any energy at all in the sleep mode. The provision of a sleep mode at least provides a slower discharge of the energy source in comparison to a toothbrush always being in an ON mode. In some embodiments, the electronic circuit 220 may be completely switched off in the sleep mode and the first signal (for example, provided by a light sensor) may comprise enough energy content to activate the electronic circuit 220. Alternatively, the electronic circuit 220 may have switched off main energy consuming parts such as a DC-DC converter and may in the sleep mode only monitor the first sensor 250, which can be realized with very low energy consumption.

According to the present disclosure, the electric toothbrush 110 may be configured to automatically initiate a "ready mode" when a relevant change of at least a first external condition is detected. A ready mode is a pre-brushing mode in which the electric toothbrush 110 consumes in average more energy than in the sleep mode. In one embodiment, the ready mode is initiated upon a first signal from the first sensor 250 indicating that the first external condition has changed in a relevant manner (i.e. a threshold value was crossed). Examples of relevant changes of external conditions include proximity of a user's hand or gripping of the toothbrush handle (capacitive sensor). For purposes of the present disclosure, a signal indicating a relevant change of an external condition does not include turning on the motor of the toothbrush.

Therefore it is beneficial to have a ready mode additionally to the operating mode and the sleep mode to save energy. This ready mode enables establishing the wireless connection in the background and preparing the oral care system without interference to the normal brushing routine of the user. The motor is still switched off during this time period till the user is ready to brush after applying paste or water to the brush head.

In one embodiment, a series of actions may be automatically started after initialization of the ready mode. For example, when a relevant change of the first external condition is indicated (for example, removing the toothbrush 110 from the charging base 115) the ready mode may include a short activation of at least one light emission element 245 for a preset period so that, for example, the user is informed that the "toothbrush is ready" via light emitting element(s) on the handle 120 of the toothbrush 110.

In one embodiment, the ready mode may also include enabling a wireless communication between the toothbrush 110 and the mobile computing device 200. For example, the Bluetooth software (in the toothbrush) may turn on the antenna and begin searching for a partner, i.e. the mobile computing device 200. Once the toothbrush 110 and the mobile computing device 200 are ready to connect, the ready mode may also include the exchanging of data between the toothbrush 110 and the mobile computing device 200 as part of the wireless communication. In other words, the toothbrush 110 is talking or communicating with the mobile computing device 200 and can begin sending internal data from the toothbrush 110 to the device without starting the application 210 on the device, i.e. the application 210 is running in the background.

Examples of the type of internal data include the speed, amplitude, or frequency of movement of a bristle holder (or toothbrush head); timing information relating to the number of times the toothbrush has been used, a duration for each use and a time for each use; the force exerted by the toothbrush on a tooth, the status of a feature or function of the toothbrush (for example, the toothbrush is energized or a feature of the toothbrush is activated or deactivated); the status of a power source (for example, a battery that is fully charged, 50% charged, or needs to be recharged or replaced); the type of brush head or cleaning elements (for example, massaging elements, polishing elements, etc.) that are coupled to the electric toothbrush, and/or the configuration of the bristle field, etc; and any aspect concerning the features of the toothbrush, the performance of the toothbrush, or the status of the toothbrush or any of its components. In some embodiments, the internal or usage data may also include regimen data for a user or multiple users.

In one embodiment, the multiple users, each with his or her own oral care implements including a motorized head, can use one motorized handle. The implement can include a sensor, which can identify the user along with indicating the relevant change in internal condition. In one example, the implement and/or the motorized handle can use RFID or NFC communication.

In one embodiment, the ready mode may be limited to a predetermined period of time, for example, in one embodiment the ready mode may be from about 1 second to about 30 seconds, in another embodiment from about 1 second to about 20 seconds and in another embodiment from about 1 second to about 10 seconds. The ready mode may also be terminated at any time by pressing button 130 to switch the toothbrush ON or placing the toothbrush 110 back on the charging base 115.

In another embodiment, the ready mode may also include automatically establishing a wireless communication between the toothbrush 110 and the mobile computing device 200 in response to activation of the ready mode. For example, the Bluetooth module in the toothbrush 110 may turn on and begin searching for a partner, i.e. the mobile computing device 200. The application 210 turns on the mobile computing device's Bluetooth module and also sends commands to the toothbrush's Bluetooth module. Thereafter, the application 210 is launched to the foreground of the mobile computing device 200 as part of the ready mode. This automatic launching of the application provides a very desirable user experience. For example, prior to beginning to brush, the application is launched and can begin providing coaching, data, targets, goals, brushing history and other features of the application before the motor of the brush is turned on. Additionally, since the communication is bidirectional, the application 210 can transmit data back to the toothbrush 110 which can be used to configure features of the toothbrush 110 and allow the user to change or adapt the operation of the toothbrush thru use of the application 210.

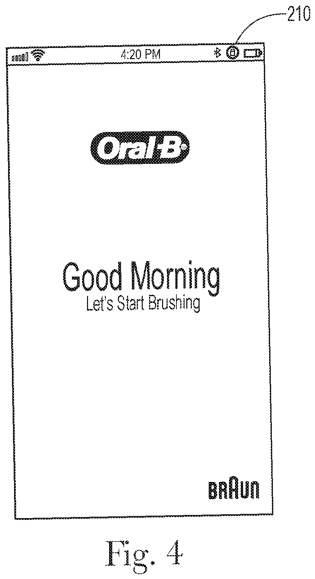

In one embodiment, as shown in FIG. 4, a display of the mobile computing device 200 may output a special application screen, for example "Good Morning - - Let's start brushing", in the case where the application 210 is launched in response to a relevant change in an external condition.

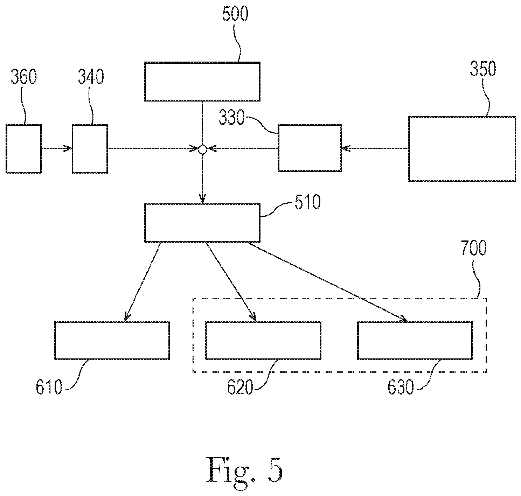

Fig. 5 is a flow chart diagram schematically depicting an example embodiment of operating an oral care system in accordance with the present disclosure. In a first state 500, the electric toothbrush is in a sleep mode in which the electronic circuit in average consumes less energy than in a ready mode. In the event that a change of a first external condition 350 triggers a first sensor 330 to provide a first signal, the electric toothbrush switches into a ready mode 510. Optionally, the electric toothbrush may switch into the ready mode 510 also on reception of a second signal from a second sensor 340 indicating a change of a second external condition 360. After activating the ready mode 510, the oral care system may perform at least the following prior to a user turning the toothbrush on, switching on one or more of the electric loads for a preset period 610; enabling a wireless communication link between toothbrush and device 620; and exchanging data between toothbrush and device as part of the wireless communication 630; the latter two partially taking place as part of the environment 700 of the mobile computing device.

A method of operating an oral care system is also disclosed in the present disclosure. In one embodiment, such a method includes the steps of a) providing an electric toothbrush 110 and a mobile computing device 200 that stores a computer application 210; b) activating a ready mode in response to a signal indicating a relevant change of an external condition; and c) triggering the system to perform at least one of the following: switching on one or more of the electric loads for a preset period; enabling or establishing a wireless communication between the electric toothbrush and the mobile computing device; or exchanging data between toothbrush and device as part of the wireless communication.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. An oral care system (100), comprising:
an electric toothbrush (110) having an energy source (260); an electronic circuit (220), in particular including a microcontroller, and one or more electric loads (240); and at least a first sensor (250) for providing a first signal indicating a relevant change of a first external condition; and
a mobile computing device (200) that stores a computer application (210);
wherein in response to a relevant change in an external condition indicated by the first signal, the electronic circuit (220) is arranged to activate a ready mode, the ready mode causing the system (100) to enable or establish a wireless communication link between toothbrush (110) and the mobile computing device (200), in particular wherein the communication is bi-directional;
**characterized in that** the first sensor (250) is a capacitance sensor.

2. The oral care system in accordance with claim 1, wherein the electric toothbrush (110) comprises a second sensor (225) for providing a second signal indicating a relevant change of a second external condition, which second sensor (225) is different to the first sensor(250).

3. The oral care system in accordance with anyone of claims 1 to 2, wherein in response to a relevant change in an external condition, the electronic circuit (220) is arranged to start exchanging data between toothbrush (110) and device (200) as part of the wireless communication.

4. The oral care system in accordance with anyone of claims 1 to 3, wherein in response to a relevant change in an external condition, the electronic circuit (220) is arranged to switch on one or more of the electric loads (240; 245) for a preset period.

5. The oral care system in accordance with anyone of claims 1 to 4, wherein one of the one or more electric loads (240; 245; 246) is a light emission element such as an LED, a display, or an audio and/or video signal reproducing element.

6. The oral care system in accordance with anyone of claims 1 to 5, wherein in response to a relevant change in an external condition, the electronic circuit (220) is arranged to trigger the launch the application (210) to the foreground of the mobile computing device (200).

7. The oral care system in accordance with anyone of claims 1 to 6, wherein the electronic circuit (220) is arranged to limit the ready mode to a predetermined time, in particular where the predetermined time period is in between 1 second and 240 seconds.

8. The oral care system in accordance with anyone of claims 1 to 7, wherein the relevant change is determined by a sensor value crossing a predetermined threshold value.

## Patentansprüche

1. Mundpflegesystem (100), umfassend:
eine elektrische Zahnbürste (110), die eine Energiequelle (260) aufweist; einen elektronischen Kreislauf (220), insbesondere einschließlich eines Mikrocontrollers, und eine oder mehrere elektrische Lasten (240); und wenigstens einen ersten Sensor (250) zum Bereitstellen eines ersten Signals, das eine relevante Änderung einer ersten externen Bedingung angibt; und
eine mobile Rechenvorrichtung (200), die eine Computeranwendung (210) speichert;
wobei als Reaktion auf eine relevante Änderung in einer externen Bedingung, die durch das erste Signal angegeben wird, der elektronische Kreislauf (220) angeordnet ist, um einen Bereitschaftsmodus zu aktivieren, wobei der Bereitschaftsmodus das System (100) veranlasst, eine drahtlose Kommunikationsverbindung zwischen Zahnbürste (110) und der mobilen Rechenvorrichtung (200) zu ermöglichen oder herzustellen, insbesondere wobei die Kommunikation bidirektional ist;
**dadurch gekennzeichnet, dass** der erste Sensor (250) ein Kapazitätssensor ist.

2. Mundpflegesystem nach Anspruch 1, wobei die elektrische Zahnbürste (110) einen zweiten Sensor (225) zum Bereitstellen eines zweiten Signals umfasst, das eine relevante Änderung einer zweiten externen Bedingung angibt, wobei sich der zweite Sensor (225) von dem ersten Sensor (250) unterscheidet.

3. Mundpflegesystem nach einem der Ansprüche 1 bis 2, wobei als Reaktion auf eine relevante Änderung in einer externen Bedingung der elektronische Kreislauf (220) angeordnet ist, um ein Austauschen von Daten zwischen Zahnbürste (110) und Vorrichtung (200) als Teil der drahtlosen Kommunikation zu beginnen.

4. Mundpflegesystem nach einem der Ansprüche 1 bis 3, wobei als Reaktion auf eine relevante Änderung in einer externen Bedingung der elektronische Kreislauf (220) angeordnet ist, um eine oder mehrere der elektrischen Lasten (240; 245) für einen vorher eingestellten Zeitraum einzuschalten.

5. Mundpflegesystem nach einem der Ansprüche 1 bis 4, wobei eine der einen oder der mehreren elektrischen Lasten (240; 245; 246) ein Lichtemissionselement, wie etwa eine LED, eine Anzeige oder ein Audio- und/oder Videosignal-Wiedergabeelement ist.

6. Mundpflegesystem nach einem der Ansprüche 1 bis 5, wobei als Reaktion auf eine relevante Änderung in einer externen Bedingung der elektronische Kreislauf (220) angeordnet ist, um das Starten der Anwendung (210) in den Vordergrund der mobilen Rechenvorrichtung (200) auszulösen.

7. Mundpflegesystem nach einem der Ansprüche 1 bis 6, wobei der elektronische Kreislauf (220) angeordnet ist, um den Bereitschaftsmodus auf eine vorher festgelegte Zeit zu begrenzen, insbesondere wobei der vorher festgelegte Zeitraum in zwischen 1 Sekunde und 240 Sekunden liegt.

8. Mundpflegesystem nach einem der Ansprüche 1 bis 7, wobei die relevante Änderung durch einen Sensorwert bestimmt wird, der einen vorher festgelegten Schwellenwert überschreitet.

## Revendications

1. Système de soins bucco-dentaires (100), comprenant :
une brosse à dents électrique (110) ayant une source d'énergie (260) ; un circuit électronique (220), comportant notamment un microcontrôleur, et une ou plusieurs charges électriques (240) ; et au moins un premier capteur (250) permettant de fournir un premier signal indiquant un changement pertinent d'une première condition externe ; et
un appareil informatique mobile (200) qui stocke une application informatique (210) ;
dans lequel, en réponse à un changement pertinent d'une condition externe indiqué par le premier signal, le circuit électronique (220) est agencé pour activer un mode prêt, le mode prêt amenant le système (100) à activer ou à établir une liaison de communication sans fil entre la brosse à dents (110) et l'appareil informatique mobile (200), en particulier dans lequel la communication est bidirectionnelle ;
**caractérisé en ce que** le premier capteur (250) est un capteur de capacité.

2. Système de soins bucco-dentaires selon la revendication 1, dans lequel la brosse à dents électrique (110) comprend un second capteur (225) permettant de fournir un second signal indiquant un changement pertinent d'une seconde condition externe, lequel second capteur (225) est différent du premier capteur (250).

3. Système de soins bucco-dentaires selon l'une quelconque des revendications 1 à 2, dans lequel, en réponse à un changement pertinent d'une condition externe, le circuit électronique (220) est agencé pour démarrer un échange de données entre la brosse à dents (110) et l'appareil (200) dans le cadre de la communication sans fil.

4. Système de soins bucco-dentaires selon l'une quelconque des revendications 1 à 3, dans lequel, en réponse à un changement pertinent d'une condition externe, le circuit électronique (220) est agencé pour allumer une ou plusieurs des charges électriques (240 ; 245) pendant un laps de temps préétabli.

5. Système de soins bucco-dentaires selon l'une quelconque des revendications 1 à 4, dans lequel l'une de la ou des charges électriques (240 ; 245 ; 246) est un élément d'émission de lumière tel qu'une LED, un dispositif d'affichage, ou un élément de reproduction de signal audio et/ou vidéo.

6. Système de soins bucco-dentaires selon l'une quelconque des revendications 1 à 5, dans lequel, en réponse à un changement pertinent d'une condition externe, le circuit électronique (220) est agencé pour déclencher le lancement de l'application (210) au premier plan de l'appareil informatique mobile (200).

7. Système de soins bucco-dentaires selon l'une quelconque des revendications 1 à 6, dans lequel le circuit électronique (220) est agencé pour limiter le mode prêt à un moment prédéterminé, en particulier lorsque le laps de temps prédéterminé est compris entre 1 seconde et 240 secondes.

8. Système de soins bucco-dentaires selon l'une quelconque des revendications 1 à 7, dans lequel le changement pertinent est déterminé par une valeur de capteur croisant une valeur de seuil prédéterminée.
